# EUROPEAN PATENT SPECIFICATION

(11) **EP 1 379 192 B1**
(45) Date of publication and mention of the grant of the patent: **06.06.2007**
(21) Application number: 01925861.5
(22) Date of filing: 02.04.2001
(51) Int. Cl.: A61C 3/14

(54) **DEVICE AND KIT FOR TOOTH EXTRACTIONS**
VORRICHTUNG UND BAUSATZ FÜR ZAHN EXTRAKTIONEN
DISPOSITIF ET KIT POUR EXTRACTIONS DENTAIRES

(43) Date of publication of application: 14.01.2004
(73) Proprietor: Fiumana, Franco, 47100 Forli (IT)
(72) Inventor: Fiumana, Franco, 47100 Forli (IT)
(74) Representative: Tonon, Gilberto
(86) International application number: PCT/IT2001/000168
(87) International publication number: WO 2002/078561

(56) References cited:
- DE-A- 19 815 133
- DE-B- 1 013 392
- US-A- 4 230 454
- US-A- 4 443 196

## Description

The present invention relates to a device, to a kit and to a related method for carrying out a tooth extraction.

The extraction of a tooth root is usually carried out by forceps or by thin and sharp levers. The latter ones are required in the cases, quite common, wherein the root to be extracted is totally incorporated in the related bone mass, hence lacking 'holding points' for gripping the root with a forceps. In this condition, moreover, the root edges are often hardly identifiable as totally or partially covered by the surrounding gingival mucosa.

In these cases, the lever is inserted between the bone juncture and an edge of the tooth root and then lever-rotated, so as to detach the root itself.

However, oft-times, due to the difficulties in isolating the root edges, the lever insertion cannot be readily carried out. In that case, first a gap between the bone and the root sufficing for said insertion is created by a bone cutter mounted on a dental drill.

The abovedescribed dental instruments of the known art and the associated root extraction techniques entail several relevant drawbacks.

The main drawback lies in the fact that the entire process proves extremely difficult for the dentist and distressing and traumatic to the patient. Moreover, often the action of the lever or even of the bone cutter determines an irreparable bone damage.

US 4,230,454 to Lococo describes a tooth extracting tool kit comprising a tooth engaging grip means connectable to a lever which, in turn, is rested against a base normally located on a tooth or teeth adjacent to the root to be extracted. The grip means comprises a spherical head which implements a swivel joint with a forked end of the lever.

The technical problem underlying the present invention is that of providing a device and a kit allowing to overcome the drawbacks hereto mentioned with reference to the known art.

Such problem is solved by a device for tooth extractions according to claim 1.

The present invention further provides a kit for tooth extractions according to claim 13.

The present invention provides several relevant advantages.

The main advantage lies in the fact that the present invention allows to simplify the root extraction process.

Other advantages, characteristics and operation modes of the present invention will be made apparent in the following detailed description of some embodiments thereof, given by way of example and not for limitative purposes. Reference will be made to the figures of the annexed drawings, wherein:
Fig. 1 is a partially exploded perspective view of a first embodiment of a device for tooth extractions according to the present invention;
Fig. 2 is a perspective view of the device of Fig. 1 in an assembled configuration;
Figs. 3A to 3C each show a perspective view related to a step of a root extraction method carried out by a kit for tooth extractions according to the present invention; and
Fig. 4 is a perspective view of the device of Fig. 1 during a final step of the extraction method of Figs. 3A-3C.

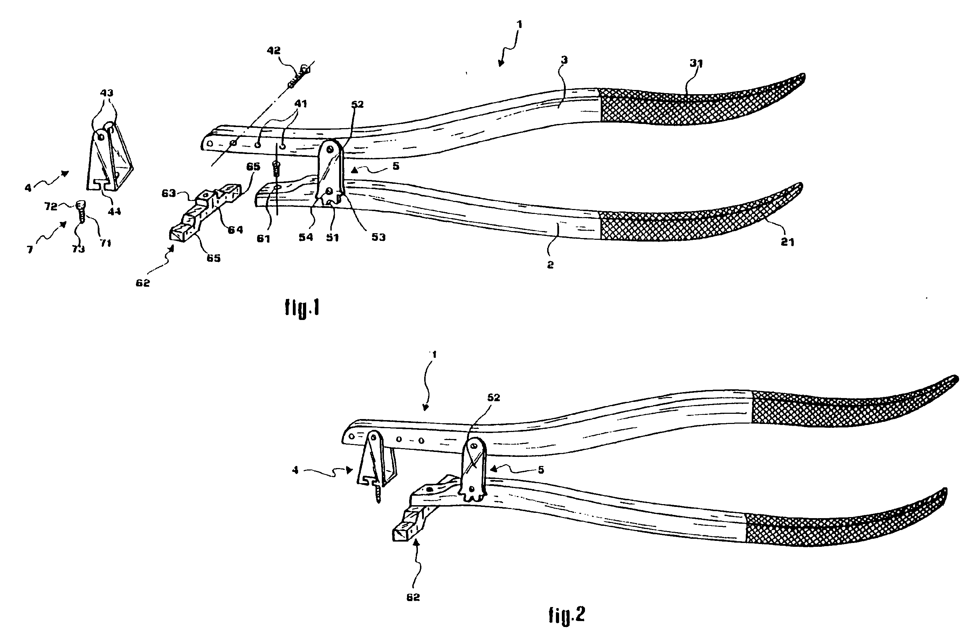

With initial reference to Figs. 1 and 2, a device for tooth extractions, and in particular for root extractions, is generally indicated with 1.

According to the invention, the device 1 comprises a first arm member 3 lever-operable within the oral cavity for carrying out the desired extraction. The member 3 is apt to be anchored to the dental structure to be extracted at an end portion thereof, which will hereinafter be referred to as operative end of the device 1, by anchoring means 4.

Then, at an end portion substantially opposite to the operative end, from now on referred to as handgrip end, such arm member 3 is actually apt to be grasped by an operator, typically a dentist.

In the present embodiment, the anchoring means 4 comprises an anchoring structure substantially shaped as a squared "U" in a front view, it also indicated with 4 and removably connectable to the first arm member 3. This connection is of the pivoting type, in order to have the structure 4 rotatable with respect to the first arm member 3.

Always in the present embodiment, the device 1 also comprises a second arm member 2, apt to be rested in the oral cavity according to modes that will be illustrated hereinafter, connected to the first arm member 3 at an intermediate portion thereof and movable with respect thereto. Hence, the device 1 of the present embodiment has a substantially forceps-shaped structure.

Always in the present embodiment, the device 1 further comprises adjustment means 5 for adjusting the relative position of the two arm members 2 and 3.

Each of the hereto introduced components will hereinafter be described in greater detail with reference to the specific embodiment considered.

The second arm member 2 has, at an operative end portion thereof, a bearing seat 61, apt to receive in reversible engagement an engaging bar 63 of an elongated bearing appendix 62.

The bearing appendix 62 comprises a shaped bridge 64 extending in a direction substantially orthogonal to the bar 63. Such bridge 64 has a substantially flattened- "V" configuration, with two flat-bottomed side ends 65. Each of the latter is apt to abut one or more teeth, adjacent or not, into the patient's oral cavity. In particular, the hereto disclosed specific configuration of the shaped bridge 64 makes the latter particularly apt to abut onto the patient's incisor teeth.

Once the connection of the bearing appendix 62 to the second arm member 2 has been carried out, the bridge 64 is arranged substantially orthogonal to the prevailing direction of development of the device 1, in order to ensure a stable and firm bearing during the extraction.

In Fig. 1, the connection of the bearing appendix 62 to the second arm member 2 is schematically represented as carried out with a traditional connecting means, like, e.g., a screw. It is understood that alternative embodiments may provide different connecting modes, like, e.g., a reversible restrained joint.

Preferably, the bearing appendix 62 is made of Teflon or of other mechanically equivalent material.

According to a simplified embodiment of the device of the invention, the abovedisclosed bearing appendix is absent. Hence, a direct contact between the operative end of the second arm member 2 and the bearing teeth, or a contact mediated by a mere buffer of a substantially parallelepiped shape may be provided.

In order to implement the abovementioned adjustment means 5 of the relative position of the two arms 2 and 3, the second arm member 2 has, in a position displaced towards the grip end with respect to the bearing seat 61, a grooved seat 51, apt to cooperate with a toothed end portion 53 of an elongated adjusting member 52. To this aim, the seat 51 has a plurality of side-by-side tracks, each apt to receive a tooth of said toothed portion 53.

In particular, the tilt of the adjusting member 52 with respect to the second arm member 2 can be varied modifying the tooth-track pairs of the portion 53 and of the engaged seat 51, respectively. Once the member 52 has been brought into a desirable position, it can be fastened, in this position, to the second arm member 2 by a connecting means of a traditional type, e.g., a threaded pin 54.

At the end portion opposite to the toothed portion 53, the adjusting member 52 is then pivotally connected by traditional means to the first arm member 3.

The first arm member has, in a position displaced towards the operative end with respect to the adjusting member 52, a plurality of anchoring seats 41. Each of the latter is apt to receive a connecting pin 42 for allowing the abovementioned reversible pivotable connection between the anchoring structure 4 and the arm 3 itself. The pin 42 may, e.g., be of the type having a butterfly stop nut (not shown in the figures.).

The anchoring structure 4 has, at each of two side walls defining the branches of the "U", a respective seat 43 apt to receive the pin 42.

Moreover, the structure 4 has, at the bottom of the "U", a shaped opening 44 for receiving in reversible engagement an engaging member 7 apt to be fastened to the tooth root. In particular, the opening 44 extends onto the wall corresponding to the bottom of the "U" starting from a side wall section of the structure 4 adjacent thereto.

In the present embodiment, the engaging member 7 is a dental screw comprising a first portion, in particular a stem 71, apt to be fastened to the root to be extracted. The stem 71 has means for gripping onto the dental structure to be extracted, in particular an external thread 73, typically wide-pitched, for easing the insertion and the grip thereof within the root canal.

The engaging member 7 further comprises a second portion, in particular a hexagon-shaped head 72, apt to engage said opening 44. In particular, the hexagon head 72 can be inserted sideways into the opening 44 and slid inwards of the "U", so as to be retained therein.

The first and the second arm member 3 and 2 further have respective grip end portions 21 and 31, apt to be grasped by the dentist. In order to ease the grasping, such portions 21 e 31 may have an outer knurl or anyhow an anatomical configuration apt to provide a firm handgrip.

The various components of the device 1 hereto disclosed, and in particular the actual forceps structure formed by the two arms 2 and 3, the bearing appendix 62 and the anchoring structure 4 may be provided to an end user as a kit.

Such kit may further comprise one or more canal screws 7 as hereto disclosed, having various cross sections, so that the kit may meet different extraction requirements.

For likewise reasons, the kit may also comprise a plurality of anchoring structures of various shapes and dimensions.

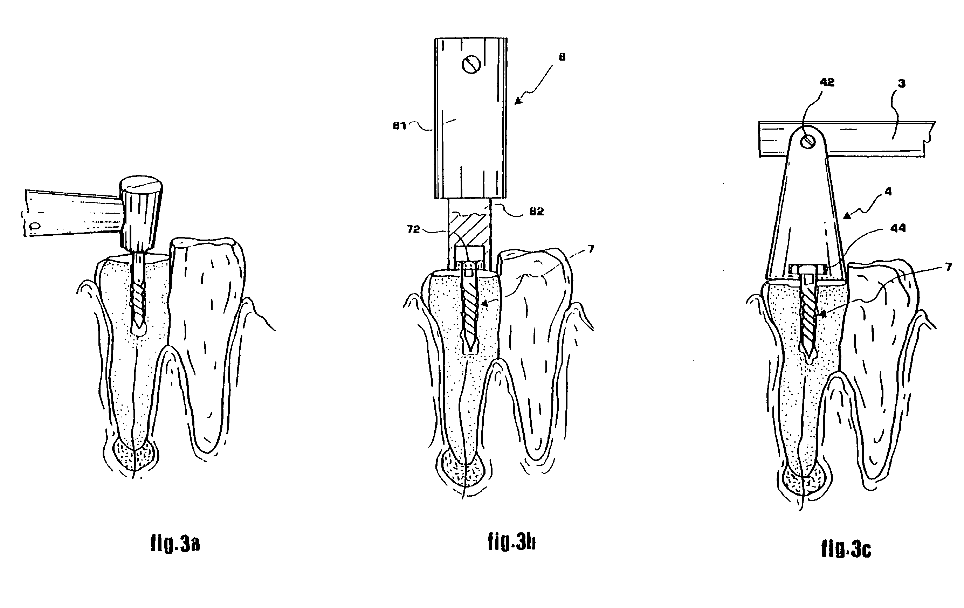

The kit may further comprise a handling tool 8, shown in Fig. 3B, for inserting the screw 7 into the root canal, and a canal reamer, schematically shown in Fig. 3A, for widening the root canal prior to the insertion of the screw 7.

In the present embodiment, the tool 8 has a knurled handling head 81, apt to be handled by the dentist directly or by a dedicated instrument received into a suitable seat in the head itself.

The tool 8 further has a tubular end portion 82 of hexagonal section. The latter is apt to receive in reversible joint the head 72 of the screw 7, thereby allowing the dentist to rotate the latter for the insertion thereof into the root canal.

The canal reamer, possibly actuated with a suitable micromotor, is of a traditional type and a further description thereof will be omitted.

However, it will be understood that the kit of the invention may also comprise a set of reamers and of handling tools of different configuration and section.

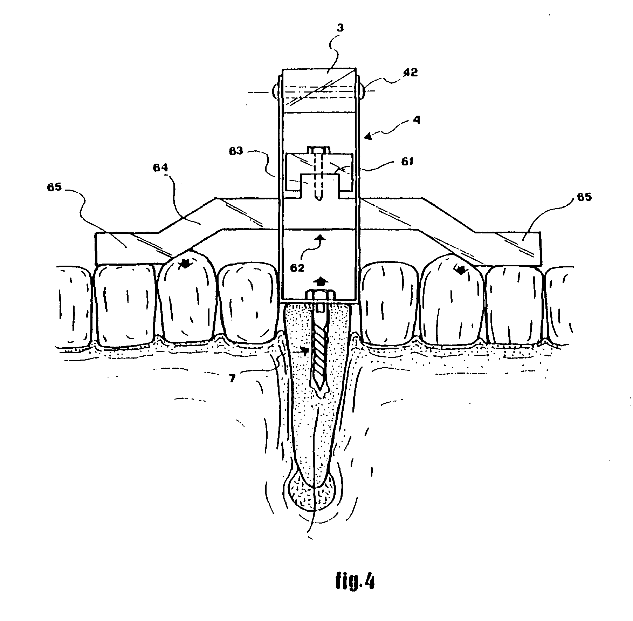

The operation modes of the device and of the kit of the invention will hereinafter be disclosed with reference to Figs. 3A, 3B, 3C and 4. In order to make apparent the variety of the possible applications of the invention, in Figs. 3A, 3B and 3C the teeth were shown as molars by way of example, whereas in Fig. 4 they were depicted as incisors to make more readily appreciable the advantages of the configuration of the bearing appendix 62 of the present embodiment.

Firstly, casewise the dentist separates the tooth roots with a bone cutter, according to a traditional technique well-known to those skilled in the art.

Then, the dentist reams the root canal with the canal reamer of the kit, in order to widen the seat for the insertion of the canal screw 7, as shown in Fig. 3A.

Then, as shown in Fig. 3B, the dentist inserts the canal screw 7 within the suitably reamed root canal, using the suitable handling tool 8 according to the aboveillustrated modes.

Then, as shown in Fig. 3C, the shaped head 72 of the screw 7 can be inserted through the opening 44 of the anchoring structure 4 and slid within such opening 44 until the stem 71 abuts the inside edge thereof.

Always with reference to Fig. 3C, the structure 4 can then be connected to the first arm member 3, in order to complete the anchoring of the tooth root to the device 1.

It will be appreciated that the plurality of anchoring seats 41 allows an adjustment of the position of the anchoring means 4 with respect to the arm 3, enhancing the versatility of the device 1.

With reference now to Fig. 4, the second arm member 2 is then rested into the oral cavity at the bearing appendix 62, which will have previously been mounted onto the arm member 2 itself.

Then, the device 1 can be operated for extracting the root at issue, acting onto the grip portions 21 and 31 of the arm members 2 and 3, respectively. In particular, levering onto the second arm 2 at the bearing region thereof into the oral cavity, the dentist rotates the first arm 3 with respect to the second arm in order to pull near the respective handgrip portions 21 and 31. This motion induces the moving away of the anchoring structure 4, and therefore of the root fastened thereto, from the anatomical seat of the latter, thus determining the desired extraction.

It will be understood that the adjusting means 5 may be handled prior to or after the insertion of the device 1 into the oral cavity, for adjusting the relative position of the two arm members 2 and 3 and hence the extractive tilt of the lever. In particular, acting on such means 5 a more or less transversal pulling direction can be attained.

It will be appreciated that the pivotable connection between the structure 4 and the first arm member 3 allows to attain a gradual extractive motion which follows a prevalent extractive direction natural and effective.

It will also be appreciated that, during the extracting motion, the Teflon construction of the bearing appendix 62 allows to attain a satisfactory compromise between resistance and elasticity in the bearing region.

Moreover, it will now be better appreciated that the device, the kit and the method of the invention allow to drastically simplify the root extraction process and to reduce the required time therefor, even in the case of tooth roots of difficult access.

In particular, the device of the invention represents an effective alternative to the use of levers as well as of forceps, and, above all, it dispenses from the use of bone cutters.

Furthermore, the extraction surgery is less distressing and traumatic to the patient with respect to the state of the art techniques, as well as safer and more repeatable, allowing a reduction of the convalescence times and of the risk of permanent damage to the bone structure and to the oral cavity in general.

The abovementioned advantages assume a remarkable importance in light of the fact that the recent development of dental implantology requires non-traumatic pre-implant extractions, in order to avoid damaging the terrain which subsequently shall integrate the bone implant.

Moreover, although the invention has hereto been described with reference to a root extraction, it is understood that it may generally apply to the extraction of any tooth structure. In particular, the invention may apply to whole-tooth extractions, e.g., where the use of levers be inadvisable or even technically impossible.

It will be understood that the hereto disclosed embodiment allows a simple and cost-effective manufacture of the device of the invention. However, the various components of the kit hereto disclosed, and in particular the bearing appendix, the anchoring structure and the engaging member, are susceptible of several alternative embodiments, in terms of configuration as well as of dimensions, to adapt to the specific patient's needs and to the type of root extraction.

For instance, alternatively to the abovedescribed plurality of seats 41, the use of dedicated adjustment means for adjusting the position of the anchoring means 4 with respect to the first arm member 3 may be provided.

Furthermore, another simplified embodiment of the invention provides that the bearing appendix and the anchoring structure are irreversibly jointed, rigidly or not, to the second and to the first arm member 2 and 3, respectively.

Moreover, according to a further embodiment the anchoring means have a slideable rather than a pivotable connection to the first arm member, still allowing a root-removing motion.

Moreover, concerning the engaging member, it may also be an insert substantially analogous to the inserts used for anchoring items to walls, and in particular provided, as gripping means, with side flaps.

Finally, it will be understood that, in light of a further simplified embodiment, the device of the invention does not comprise the abovedescribed second arm member. In fact, such device may also be implemented by a single arm member analogous to the first arm member hereto described, connected or connectible to anchoring means as abovedescribed at an end or at an intermediate portion thereof.

Moreover, this single arm member may be connected or connectable also to bearing means, like, e.g., the abovedescribed bearing appendix, which may be arranged at an end or at an intermediate portion thereof.

In light of this simplified embodiment, in order to carry out the tooth extraction the operator rotates the arm member levering onto the bearing region into the oral cavity.

The present invention has hereto been described with reference to preferred embodiments thereof. It has to be understood that other embodiments may exist, afferent to the same inventive core and all falling within the protective scope of the annexed claims.

## Claims

1. A device (1) for tooth extractions, comprising:
- a first arm member (3), lever-operable within the oral cavity; and
- anchoring means (4), for anchoring the dental structure to be extracted to said arm member at an operative portion of the latter, said anchoring comprising an anchoring structure (4) substantially shaped as a «U»,
**characterised in that** said anchoring structure (4) has a shaped opening (44) obtained at the bottom of said «U» and apt to removably receive an engaging member (7) fastenable to the dental structure to be extracted.

2. The device (1) according to claim 1, wherein said anchoring structure (4) is removably connectable to said arm member (3).

3. The device (1) according to claim 2, wherein said arm member (3) has a plurality of anchoring seats (41), each apt to receive in removable engagement said anchoring structure (4).

4. The device (1) according to any one of the preceding claims, wherein said anchoring means (4) is pivotally connected or connectable to said arm member (3).

5. The device (1) according to any one of the preceding claims, wherein said anchoring structure (4) is substantially shaped as a squared «U».

6. The device (1) according to any one of the preceding claims, comprising a second arm member (2) apt to be rested within the oral cavity, connected to said first arm member (3) at an intermediate section thereof and movable with respect thereto.

7. The device (1) according to claim 6, wherein said first arm member (3) is pivotally connected to said second arm member (2).

8. The device (1) according to claim 6 or 7, comprising adjustment means (5) for adjusting the relative position of said arm members (2, 3).

9. The device (1) according to claim 8, wherein said adjusting means (5) comprises a grooved seat (51) obtained in one of said arm members (2, 3) at said connection between said arm members, and a toothed member (52) interposed between said arm members, having a first toothed portion (53) apt to engage said grooved seat and a second portion connected to the other of said arm members.

10. The device (1) according to any one of the preceding claims, comprising an elongated bearing appendix (62), connected or connectable to the remaining part of said device.

11. The device (1) according to claim 10, wherein said bearing appendix (62) comprises a shaped bridge (64) apt to be arranged substantially orthogonally to a prevailing direction of development of said device.

12. The device (1) according to claim 10 or 11, wherein said bearing appendix (62) is made of Teflon.

13. A kit for tooth extractions, comprising a dental device (1) according to any one of the claims 1 to 12 and at least one engaging member (7) comprising a first portion (71) apt to be fixed to the dental structure to be extracted and a second portion (72) apt to engage said anchoring structure (4).

14. The kit according to claim 13, wherein said at least one engaging member (7) comprises means (73) for gripping onto the dental structure to be extracted.

15. The kit according to claim 14, wherein said at least one engaging member is a dental screw (7).

16. The kit according to claim 14 or 15, comprising a handling tool (8) for fastening said engaging member (7) to the dental structure to be extracted.

17. The kit according to any one of the claims 13 to 16, comprising at least one canal reamer.

## Patentansprüche

1. Vorrichtung (1) für Zahnextraktionen, umfassend:
- ein erstes Armelement (3), das als Hebel innerhalb der Mundhöhle betätigbar ist; und
- ein Verankerungsmittel (4) zum Verankern der zu extrahierenden Dentalstruktur einem Funktionsbereich des Armelementes, wobei das Verankerungsmittel eine im Wesentlichen U-förmige Verankerungsstruktur (4) aufweist,
**dadurch gekennzeichnet, dass** die Verankerungsstruktur (4) eine geformte Öffnung (44) an der Unterseite des U's aufweist, die dazu geeignet ist, ein Eingriffelement (7) entfernbar aufzunehmen, das an der zu extrahierenden Zahnstruktur befestigbar ist.

2. Vorrichtung (1) nach Anspruch 1, wobei die Verankerungsstruktur (4) entfernbar mit dem Armelement (3) verbindbar ist.

3. Vorrichtung (1) nach Anspruch 2, wobei das Armelement (3) eine Mehrzahl von Verankerungssitzen (41) aufweist, die jeweils dazu geeignet sind, im entfernbaren Eingriff die Verankerungsstruktur (4) aufzunehmen.

4. Vorrichtung (1) nach einem der vorhergehenden Ansprüche, wobei das Verankerungsmittel (4) schwenkbar mit dem Armelement (3) verbunden oder verbindbar ist.

5. Vorrichtung (1) nach einem der vorhergehenden Ansprüche, wobei die Verankerungsstruktur (4) im Wesentlichen als ein rechteckiges U geformt ist.

6. Vorrichtung (1) nach einem der vorhergehenden Ansprüche, die ein zweites Armelement (2) aufweist, das dazu geeignet ist, sich innerhalb der Mundhöhle abzustützen, und das mit dem ersten Armelement (3) an einem Zwischenabschnitt von diesem verbunden und relativ zu diesem bewegbar ist.

7. Vorrichtung (1) nach Anspruch 6, wobei das erste Armelement (3) schwenkbar mit dem zweiten Armelement (2) verbunden ist.

8. Vorrichtung (1) nach Anspruch 6 oder 7, die ein Einstellmittel (5) zum Einstellen der Relativposition der Armelemente (2, 3) umfasst.

9. Vorrichtung (1) nach Anspruch 8, wobei das Einstellmittel (5) einen mit Rillen versehenen Sitz (51) aufweist, der in einem der Armelemente (2, 3) an der Verbindung zwischen den Armelementen vorgesehen ist, und ein mit Zähnen versehenes Element (52), das zwischen den Armelementen angeordnet ist und einen ersten mit Zähnen versehenen Bereich (53), der dazu geeignet ist, mit dem mit Rillen versehenen Sitz in Eingriff zu kommen, und einen zweiten Bereich aufweist, der mit dem anderen der Armelemente verbunden ist.

10. Vorrichtung (1) nach einem der vorhergehenden Ansprüche, die einen gestreckten Stützfortsatz (62) aufweist, der mit dem verbleibenden Teil der Vorrichtung verbunden oder verbindbar ist.

11. Vorrichtung (1) nach Anspruch 10, wobei der Stützfortsatz (62) ein geformtes Brückenelement (64) aufweist, das dazu geeignet ist, im Wesentlichen orthogonal in Bezug auf eine vorherrschende Erstreckungsrichtung der Vorrichtung angeordnet zu werden.

12. Vorrichtung (1) nach Anspruch 10 oder 11, wobei der Stützfortsatz (62) aus Teflon hergestellt ist.

13. Bausatz für Zahnextraktion, umfassend eine Dentalvorrichtung (1) nach einem der Ansprüche 1 bis 12, und wenigstens ein Eingriffselement (7) mit einem ersten Bereich (71), der dazu geeignet ist, an der zu extrahierenden Dentalstruktur befestigt zu werden, und einem zweiten Bereich (72), der dazu geeignet ist, mit der Verankerungsstruktur (4) in Eingriff gebracht zu werden.

14. Bausatz nach Anspruch 13, wobei das wenigstens eine Eingriffselement (7) Mittel (73) zum Ergreifen der zu extrahierenden Dentalstruktur aufweist.

15. Bausatz nach Anspruch 14, wobei das wenigstens eine Eingriffselement eine Dentalschraube (7) ist.

16. Bausatz nach Anspruch 14 oder 15, der ein Handhabungswerkzeug (8) zum Befestigen des Eingriffselements (7) an der zu extrahierenden Dentalstruktur umfasst.

17. Bausatz nach einem der Ansprüche 13 bis 16, der wenigstens eine Kanalreibahle aufweist.

## Revendications

1. Dispositif (1) pour des extractions dentaires, comportant :
- un premier élément formant bras (3), pouvant être actionné par levier dans la cavité buccale, et
- des moyens d'ancrage (4) pour ancrer la structure dentaire devant être extraite sur ledit élément formant bras au niveau d'une partie opérationnelle de ce dernier, lesdits moyens d'ancrage comportant une structure d'ancrage (4) sensiblement en forme de "U",
**caractérisé en ce que** ladite structure d'ancrage (4) a une ouverture mise en forme (44) obtenue au niveau de la partie inférieure dudit "U", et apte à recevoir de manière amovible un élément de mise en prise (7) pouvant être fixé sur la structure dentaire devant être extraite.

2. Dispositif (1) selon la revendication 1, dans lequel ladite structure d'ancrage (4) peut être reliée de manière amovible audit élément formant bras (3).

3. Dispositif (1) selon la revendication 2, dans lequel ledit élément formant bras (3) a une pluralité de sièges d'ancrage (41), chacun étant apte à recevoir en prise amovible ladite structure d'ancrage (4).

4. Dispositif (1) selon l'une quelconque des revendications précédentes, dans lequel lesdits moyens d'ancrage (4) sont reliés ou peuvent être reliés de manière pivotante audit élément formant bras (3).

5. Dispositif (1) selon l'une quelconque des revendications précédentes, dans lequel ladite structure d'ancrage (4) est sensiblement en forme de "U" carré.

6. Dispositif (1) selon l'une quelconque des revendications précédentes, comportant un second élément formant bras (2) apte à être mis en appui dans la cavité buccale, relié audit premier élément formant bras (3) au niveau d'un tronçon intermédiaire de celui-ci, et mobile par rapport à celui-ci.

7. Dispositif (1) selon la revendication 6, dans lequel ledit premier élément formant bras (3) est relié de manière pivotante audit second élément formant bras (2).

8. Dispositif (1) selon la revendication 6 ou 7, comportant des moyens d'ajustement (5) pour ajuster la position relative desdits éléments formant bras (2, 3).

9. Dispositif (1) selon la revendication 8, dans lequel lesdits moyens d'ajustement (5) comportent un siège rainuré (51) obtenu dans un premier desdits éléments formant bras (2, 3) au niveau de ladite connexion entre lesdits éléments formant bras, et un élément denté (52) interposé entre lesdits éléments formant bras, ayant une première partie dentée (53) apte à venir en prise avec ledit siège rainuré, et une seconde partie reliée à l'autre desdits éléments formant bras.

10. Dispositif (1) selon l'une quelconque des revendications précédentes, comportant un appendice de support allongé (62) relié ou pouvant être relié à la partie restante dudit dispositif.

11. Dispositif (1) selon la revendication 10, dans lequel ledit appendice de support (62) comporte un pont mis en forme (64) apte à être agencé sensiblement de manière orthogonale par rapport à une direction dominante de développement dudit dispositif.

12. Dispositif (1) selon la revendication 10 ou 11, dans lequel ledit appendice de support (62) est réalisé en Téflon (nom commercial déposé).

13. Kit pour des extractions dentaires, comportant un dispositif dentaire (1) selon l'une quelconque des revendications 1 à 12, et au moins un élément de mise en prise (7) comportant une première partie (71) apte à être fixée sur la structure dentaire devant être extraite, et une seconde partie (72) apte à venir en prise avec ladite structure d'ancrage (4).

14. Kit selon la revendication 13, dans lequel au moins un élément de mise en prise (7) comporte des moyens (73) de préhension de la structure dentaire devant être extraite.

15. Kit selon la revendication 14, dans lequel ledit au moins un élément de mise en prise est une vis dentaire (7).

16. Kit selon la revendication 14 ou 15, comportant un outil de manipulation (8) pour fixer ledit élément de mise en prise (7) sur la structure dentaire devant être extraite.

17. Kit selon l'une quelconque des revendications 13 à 16, comportant au moins un alésoir de canal.
